Europäisches Patentamt

European Patent Office

Office européen des brevets

(19)

(11) Publication number: 0 354 645
A2

# (12) EUROPEAN PATENT APPLICATION

(21) Application number: 89305428.8

(22) Date of filing: 30.05.89

(51) Int. Cl.4: **G06F 15/419 , G06F 15/413**

(30) Priority: **10.08.88 US 230853**

(43) Date of publication of application:
**14.02.90 Bulletin 90/07**

(84) Designated Contracting States:
**AT BE CH DE ES FR GB GR IT LI LU NL SE**

(71) Applicant: **DIGITAL EQUIPMENT
CORPORATION
111 Powdermill Road
Maynard Massachusetts 01745-1418(US)**

(72) Inventor: **Walls, Keith G.
180 Coburn Woods
Nashua New Hampshire 03063(US)**
Inventor: **Goldstein, Andrew
167 Lincoln Street
Hudson Massachusetts 01749(US)**

(74) Representative: **Goodman, Christopher et al
Eric Potter & Clarkson 14 Oxford Street
Nottingham NG1 5BP(GB)**

(54) Retrieving files from disk storage.

(57) A method of retrieving files from a rotating disk storage, where portions (extents) of each file are stored at different logical addresses on the disk; information about the logical addresses of the extents is also stored on the disk in a prearranged order that is not necessarily the same as the logical order of the logical addresses of the file extents; the logical ordering of the file portions is determined from the stored location information and then the file portions are scanned in logical location order to retrieve the file.

EP 0 354 645 A2

## Retrieving Files From Disk Storage

### Background of the Invention

This invention relates to retrieving files of information from rotating disk storage for, e.g., making copies of disk media.

A typical rotating magnetic disk storage system, for example, has a stack of round platters mounted one above another on a common rotating vertical spindle. Information is stored on both the top and bottom surfaces of each platter. The storage space on each surface is organized in concentric circular bands, called tracks. A particular track at a given distance from the axis of rotation on one surface together with the corresponding tracks at that same distance on the top and bottom surfaces of all of the platters makes up a cylinder. Each track is divided about the axis of rotation into a number S of equal-sized sectors, also called blocks. A block is the smallest unit of storage space e.g., 512 bytes, that may be independently accessed. The physical blocks on the platters are assigned physical block numbers (PBNs) in order from 1 to N, where, for example, PBN1 is the first block of the outermost track of the top surface of the uppermost platter, PBN $S+1$ is the first block of the outermost track of the bottom surface of the uppermost platter, and PBN N is the final block of the innermost track of the bottom surface of the bottom platter. If a given physical block is damaged, a good block may be subsituted for the bad one, and for that reason a set of logical block numbers (LBNs) from 0 to N-1 are reserved and a replacement and caching table is stored on the disk to convert from LBNs to PBNs.

A given file of information is typically stored in several groups of blocks (also called extents) that may not be physically continuous on the disk. In order to find the extents where a particular named file are located, a directory and index system is used. When a file or a set of files is to be retrieved, e.g., when an entire disk is to be copied to another disk or tape for backup purposes, the read/write heads perform a large number of time consuming seeks back and forth across the platters, as they shuttle between the index and the successive blocks where pieces of the files are stored. In general, seeks between tracks of different cylinders take longer than seeks between tracks on different platters within a given cylinder. Quicker still are seeks from the tracks of a given cylinder on the top side of a platter to the track of the same cylinder on the bottom of the same platter. The fastest seeks are those within a single track.

### Summary of the Invention

In general, the invention features a method of retrieving files from a rotating disk storage, where portions (extents) of each file are stored at different logical addresses on the disk; information about the logical addresses of the portions is also stored on the disk in a prearranged order that is not necessarily the same as the logical order of the logical addresses of the file extents; in the method of the invention, the logical ordering of the file portions is determined from the stored location information, and then the file portions are scanned in logical location order to retrieve the file.

Preferred embodiments of the invention include the following features. The information about the logical addresses for each file is read, and a table is built listing the logical addresses of the portions of the files in an order corresponding to the order in which the portions form the respective files. The table is sorted so that the logical addresses are listed in numerical order. During scanning, the logical addresses in the sorted table are read in order and the disk is scanned accordingly. Thus, the blocks are read from the input disk in a different order from the order in which they are written on the output medium. A scheme of optional memory usage buffers the input file data so that the quantity of data read in each pass of the input disk will be optional in size thus reducing the number of disk read passes which must be performed to read the input disk. The retrieved files are stored on a second storage medium (e.g., magnetic tape), with the portions of each file stored in the order in which they make up the file.

As a result, the file is retrieved from the original disk quickly with a miminal amount of wasted head movement, and the files may be retrieved quickly and easily from the back-up tape.

Other advantages and features will become apparent from the following description of the preferred embodiments, and from the claims.

## Description of the Preferred Embodiments

We first briefly describe the drawings.

Fig. 1 is a diagram of the blocks of a disk and two scanning sequences.

Fig. 2 is flow chart of a technique for reading files from a disk.

Fig. 3 is a diagram of a section of magnetic tape.

Structure

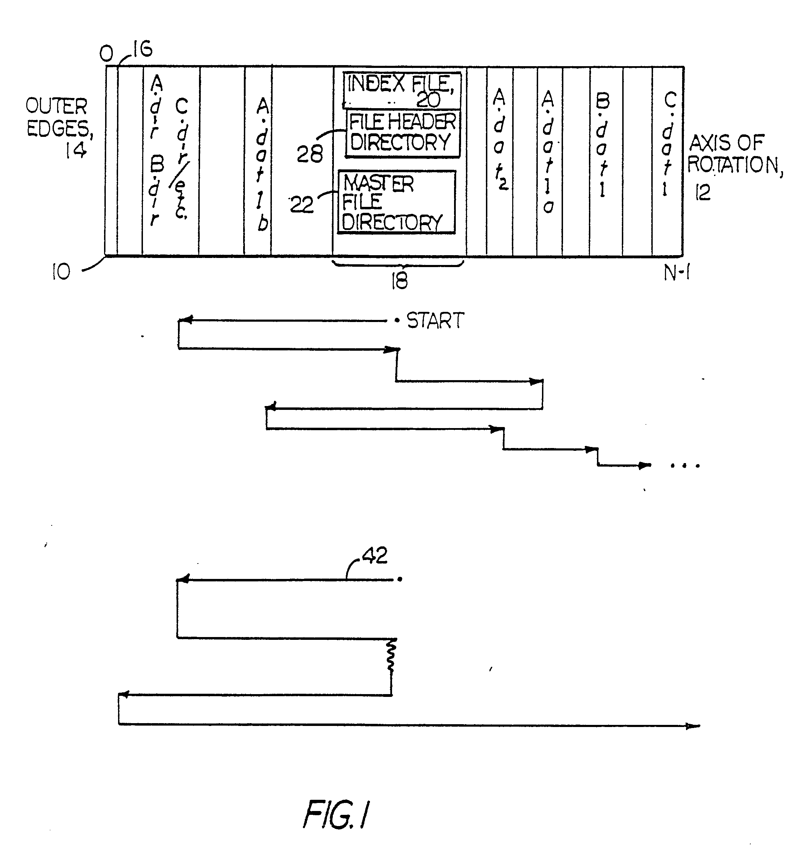

Referring to Fig. 1, the blocks of a disk system may be schematically represented by a horizontal box 10 with the axis of rotation 12 to the right of the box, the outer edges 14 of the platters to the left of the box and the successive cylinders 16 represented by a series of vertical strips within the box. LBN 0 then appears at the upper left corner and LBN N-1 at the lower right corner.

In the Digital Equipment Corporation VMS operating system, blocks that are physically located in the cylinders 18 that are midway between the axis of rotation and the outer edges of the platters are normally used to store an index file 20 and a master file directory (MFD) 22. The MFD holds a table of entries in which each entry relates an individual account's files, e.g., the files for project A, to the block location of a directory file, called A.Dir which lists files belonging to A. The directory files A.Dir, B.Dir, ... are located in another region of blocks 24, e.g., near the outer edges 14.

In each directory file, the files belonging to that project are listed alphabetically, for example:

A.Dir

A.dat 1 (a)
A.dat 1 (b)
A.dat 2
A.dat 3
A.dir 1

The listed files may be either data files or additional lower-level directories. Each data file is typically split apart for storage in two or more extents (in the example above, the data 1 file has two parts, a and b). The locations of the extents are shown in Fig. 1.

The index file 20 also contains a file header directory 28 that holds an entry for each part of each of the user files and for lower-level directories. In each entry is stored an extent mapping that includes the starting location LBN and size in blocks of the corresponding file extent or directory. For example, a portion of the extent map may look like this:

|  | LBN | Size | VBN |
|---|---|---|---|
| A.dat 1(a) | 106593 | 10 | 1 - 10 |
| A.dat 1(b) | 2952 | 5 | 11 - 15 |
| A.dat 2 | 69321 | 90 | 1 - 90 |

Thus A.dat 1(a) may be found beginning at LBN 106593 and running for ten blocks, while the other part of the file A.dat 1(b) begins at LBN 2952 and runs for five blocks. Within a user file the blocks may be given consecutive virtual block numbers (VBN) beginning with one. As indicated above there are 15 blocks in file A.dat 1, with VBN 1 - 10 found beginning at LBN 106593 and VBN 11 - 15 found beginning at LBN 2952.

To retrieve a file, e.g., the A.dat 1 file using conventional techniques the head would first go to the MFD to find the A.Dir file, then to A.Dir to find the names of the pieces of the A.dat 2 file, then to the file header directory to find the starting LBN addresses and sizes of the two parts of A.dat 1, and finally would go one after the other to the blocks where the two parts are located. If the files being sought were not listed in A.Dir but rather in a sub-directory, an even greater number of head seeks would be required.

In making a backup copy of all files on a disk, using known techniques, even more seeks must be performed. First the head goes to the MFD to read the location of the first user directory. Then it goes to that user directory where it reads, and stores, in a cache memory, a list of files in that directory. If the user directory includes lower level directories, the head must seek those directories also in order to generate the file list of files. Next the head seeks to the file head directory in the index file to read the extent map to find the starting location and sizes of all parts of the first user file. The head then seeks to each starting location in turn and reads the portion of the file contained there until the entire file has been read. Next the head repeats the previous two steps with respect to every other file of that user, and then repeats the entire process for every other user directory.

Referring to Fig. 1, beneath the box 10 (representing the disk) is a path showing the seeks required of the head in copying the files of the disk up to C.dat 1. Note that the extents of any given file are scanned in virtual block number order.

In the invention, by contrast, the user files are read in substantially LBN order, greatly reducing head movement and associated disk rotation dwell times.

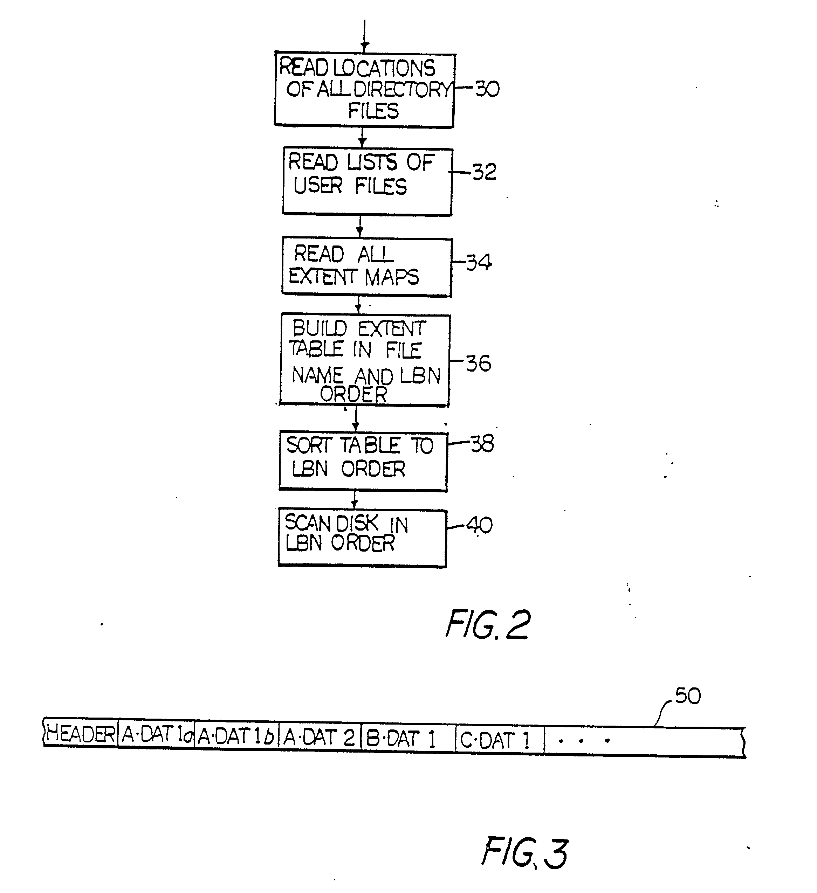

Referring to Fig. 2, this is accomplished by first building a table from the index file and directory files that will then serve as a map to permit scanning the disk in LBN order.

First, the head seeks to the index file, and reads (30) and temporarily stores the locations of all directory files. Next the head seeks to each directory file in turn and reads (32) and temporarily stores the list of user files contained in each one. Then the head seeks to the file header directory 28 and reads (34) all of the extent maps for all of the named user files. As the head reads the extent maps, it builds (36) a complete extent table of all the extent information in file name order. A small section at the beginning of extent table might look like this:

| LBN | File Portion Name | Size |
|---|---|---|
| 106593 | A.dat 1(a) | 10 |
| 2952 | A.dat 1(b) | 5 |
| 69321 | A.dat 2 | 90 |
| 120021 | B.dat 1 | 82 |
| 290103 | C.dat 1 | 201 |

Then the extent table is sorted (38) into LBN order:

| LBN | File Portion Name | Size |
|---|---|---|
| 2952 | A.dat 1(b) | 5 |
| 69321 | A.dat 2 | 90 |
| 106593 | A.dat 1(a) | 10 |
| 120021 | B.dat 1 | 82 |
| 290103 | C.dat 1 | 201 |

Finally, the head proceeds to scan (40) directly across the disk 12 LBN order, following the table, reading each named portion of a file in turn and delivering them for use, e.g., in writing another backup disk.

Referring to the bottom of Fig. 1, the seek sequence 42 of the Fig. 2 procedure requires many fewer seeks than in conventional scanning. The only cost is the longer period of time required at the beginning to build the extent table.

If some files are privileged, they may be flagged in the extent table so that the head passes over the privileged files during scanning.

The technique is especially efficient for disks on which the files may be split into many parts.

Note that in creating the extent table, it may only be possible, given the available memory space, to cover a portion of the files. When the size of the extent table has reached the limit, those files are scanned and the process is repeated for the remaining files.

Referring to Fig. 3, when the files have been read from the original disk, they are recorded on, for example, a backup tape 50 in file order as shown, with all of the extents of a given file also stored in order. Retrieval from the backup tape is then fast and convenient.

Other embodiments are within the following claims.

4

## Claims

1. A method of retrieving files from a rotating disk storage, where different portions of each file are stored at different logical addresses on the disk and information about the logical addresses of the portions is also stored on the disk in a prearranged order that is not necessarily the same as the logical order of the logical addresses of the file extents, said method comprising:
determining, from said location information, the logical location ordering of said file portions, and thereafter, scanning said portions in logical location order to retrieve said file.

2. The method of claim 1 wherein said step of determining the logical location ordering includes reading said information about the logical addresses for each said file, and building a table listing the logical addresses of said portions, said logical addresses being listed in an order corresponding to the order in which said portions form said respective files.

3. The method of claim 2 wherein said step of determining the logical location ordering includes sorting said table so that said logical addresses are listed in numerical order.

4. The method of claim 3 wherein said step of scanning said portions in logical location order comprises reading the logical addresses in said sorted table in order and scanning said disk in accordance with said logical entries.

5. The method of claim 4 further comprising storing said retrieved files on a second storage medium, with the portions of each file stored in the order in which they make up said file.

6. The method of claim 5 wherein said second storage medium is a magnetic tape, magnetic disk, or optical storage medium.

FIG.1

FIG. 2

FIG. 3